# EUROPEAN PATENT SPECIFICATION

(11) **EP 2 675 548 B1**
(45) Date of publication and mention of the grant of the patent: **01.07.2020**
(21) Application number: 12746525.0
(22) Date of filing: 13.02.2012
(51) Int. Cl.: B01D 47/00, B01D 53/14, B01D 53/18

(54) **Method of absorbing a gas compound**
Verfahren zur Absorption einer Gaskomponente
Procédé d'absorption d'un composant gaseux

(30) Priority: 27.09.2011 US 201161626493 P; 14.02.2011 US 201161463194 P
(43) Date of publication of application: 25.12.2013
(73) Proprietor: Industrial Climate Solutions, Inc., Calgary, AB T2P0S4 (CA)
(72) Inventor: DUGAN, Craig, Park Orchards, Victoria, 3114 (AU); PELLEGRIN, Roy, J., Wailuku, HI 96793 (US); HARGROVE, William, L., Kihei, HI 96753 (US); LIU, Zhenshuo, Bobby, Missouri City, TX 77459-4663 (US)
(74) Representative: Mewburn Ellis LLP
(86) International application number: PCT/US2012/000083
(87) International publication number: WO 2012/112224

(56) References cited:
- SU-A1- 1 627 227
- US-A- 5 749 945
- US-A1- 2003 177 904
- US-A1- 2009 044 502
- US-B2- 6 872 240
- US-B2- 7 854 791
- US-B2- 7 854 791

## Description

### BACKGROUND

Typical prior art absorbers utilize what is described herein as a static, fixed surface area on which the absorption occurs. For example, a common absorber design is a "shaped packing" design. In this design, packing elements with complex surface shapes are placed in a fixed size chamber. A liquid solvent is typically caused to flow downwardly and wet the fixed size exterior surfaces of the elements. This provides a large surface area for mass transfer between the solvent and the gas. A gas is then driven upwardly through the packing, and a selected component of the gas is absorbed into the surface of the solvent. The surface area of the packing remains fixed and static. The three commercial types of packing are random, structured trays, and spray towers. The fixed and static surface area is a major limitation of the prior art.

Another common limitation of known absorbers is the relatively short amount of time in which the two fluids are in surface contact with each other. The prior art designs typically use a counter-flow arrangement wherein the solvent in the above specific shaped packing example flows downwardly and the gas flows upwardly. The counter-flow technique is utilized to maximise the concentration gradient between the two fluids but has the inherent limitation of minimizing the time in which the surfaces of the two fluids are in contact.

A further limitation of these conventional packings is the significant height of packing required to facilitate the absorption process. A further limitation of most prior art absorbers is that they require relatively expensive materials in their construction. The large surface area of these packings which is required to facilitate absorption also makes them susceptible to fouling where the surfaces can become fouled with dirt, impurities from the gas or liquid or precipitation products from the absorption itself.

US7854791 B2 discloses a method and apparatus for improving the efficiency of an aqueous froth filter.

SU1627227A1 discloses a heat and mass exchanger.

The present invention overcomes all of the above limitations of the prior art.

### BRIEF SUMMARY OF INVENTION

The present invention provides a method as set out in claim 1. Further aspects of the present invention are set out in the remaining claims.

The present invention not only overcomes the above limitations of the prior art; the applicants have identified the hydrodynamic phenomenon described below as "solvent pushing." This phenomenon significantly enhances absorption efficiency in the absorber described herein.

The present invention, in contrast to using the prior art static, fixed surface area, creates dynamic, rapidly changing, large surface area for a given volume. Solvent bubbles and droplets are intentionally caused to burst and are formed and shattered, at a rapid rate. The objective is to create the densest possible array of the smallest bubbles, droplets and micro-droplets and to repeatedly, rapidly and violently cause each of them to break up or fragment. The mass transfer surface is greatly increased and constantly refreshing, thereby maximising the mass transfer (or absorption) within a given volume of an absorber reaction chamber. The contact environments range from an aqueous-froth column with a micro-froth matrix that is reformed at high frequency, to a transient froth that alternates at high frequency from a micro-froth matrix to a projectile spray fueled by bursting bubbles, to a shear-spray with isolated membrane rupture and impact fragmentation. Each of these dynamic mass transfer processes provide a high reactant surface area and a dramatic increase in absorption efficiency compared to conventional gas/liquid absorbers.

The present invention uses screens to fragment the solvent froth into a myriad of droplets which creates a very large surface area for mass transfer, which surface is made up of the solvent itself. But instead of leaving the small droplets intact in a confined space which would produce a relatively static, fixed surface area similar to prior art devices, the present invention continuously and violently fragments and reforms the droplets at a rapid rate. Bubbles also form which in turn are caused to burst, forming thousands of microscopic droplets from each bursting bubble, whereby the active surface area of the liquid solvent is further increased. This high frequency and continuous regeneration of the surface of the liquid solvent is a significant aspect of the invention. An enormous reaction surface is created in a small volume. The reaction surface is continuously and violently ruptured and reformed to maximize the efficiency of the mass transfer.

The present invention also differs significantly from the prior art in that it maximizes the time period of contact between gas and solvent by using a concurrent flow as opposed to a counter flow technique. By maximizing the time period of contact, we inherently maximize the efficiency of the absorption process. The time period of contact may be further extended by using multiple stages in the process.

The present invention, by continuously and rapidly regenerating the surface area of the solvent (in the example given) maintains a maximized concentration gradient across the entire surface of the solvent for the entire time period in which the gas and solvent are in contact with each other, all for the purposes of mass transfer. Any given droplet or bubble will interact with the gas across its entire surface momentarily, and then the bubbles burst, many droplets are fragmented into micro-droplets, some droplets coalesce and are then reformed as the liquid is forced through the screen. Each time this process is repeated the freshly formed surface provides new solvent surface area to interact with the gas with a maximized concentration gradient, since the surfaces of the bubbles, droplets, and micro-droplets do not remain intact long enough to become saturated with the component being removed or absorbed from the gas.

In addition to the above advantages, the applicants have identified the hydrodynamic phenomenon referred to herein as "solvent pulsing," which substantially increases absorption efficiency. Although overall liquid-gas molar flow rate ratios are comparable to conventional contactors, solvent volumetric flow rate in the present absorber is not constant. Rather, solvent volumetric flow rate initially is low and a fraction of the solvent accumulates in the pulsing screens described herein. Upon reaching a critical saturation, a large fraction of the accumulated solvent travels downstream at high volumetric flow rate in a pulse. After the pulse, the solvent volumetric flow rate is low again until another pulse occurs. This repeats ad infinitum. This pulsing is beneficial because at flow rates and liquid-gas ratios similar to that of conventional columns the Reynolds number for the liquid places it squarely in the laminar regime. However, because the absorber experiences the pulsing phenomenon, it greatly increases the volumetric flow rate during a pulse bringing it more in line with turbulent flow. There exists numerous literature that show turbulent flow causes better mixing. Furthermore, high speed photography shows pulsing enhancing the formation of micro-froth. Literature also exists that show froth and bubble structures enhance contact area. The use of co-current flow and the geometry of the screens allow for these important solvent pulses to occur.

The present invention also differs significantly from the prior art in that less materials can be used to fabricate the absorber of the present invention.

The present invention also represents a significant improvement over existing absorber systems. An inherent limitation of such absorbers is the efficiency and physical size of the absorber. As the liquid stream trickles down through the packing any non-uniformity in the packing or maldistribution of the liquid onto the packing or the absorber itself not being perfectly level will cause channeling of the liquid. This channeling or maldistribution will reduce the effective surface area of the packing available for mass transfer thereby reducing the efficiency of the absorber. To prevent this, packing bed heights are limited to 5 to 10 m and require redistributors for the gas and liquid between packed sections.

The present invention includes a technique which eliminates "channeling" and also simultaneously increases the efficiency of absorbers. In examples which are not in accordance with the invention, an array of tubes strategically placed in the reaction chamber are used; the tubes force the gas stream to divide itself into smaller, equally sized sub streams to flow through the array of tubes. This technique causes all portions of the gas and liquid streams to be equally distributed thus eliminating the problems of channeling or maldistribution associated with conventional absorbers and allowing for absorbers of significantly larger diameter than absorbers using conventional packing. These tubes can be round, square, polyhedral or almost any geometric shape.

A further example which is not in accordance with the present invention uses venturi tubes in lieu of screens. In the case of venturi tubes as the gas passes through the throat of the venturi a pressure drop occurs. This low pressure area in the throat will sink solvent from the surrounding solvent reservoir. The speed of the gas passing through the venturi will cause the solvent to spray into the venturi. Further fragmenting or shattering of the liquid into droplets and micro-droplets may be induced by the placement of static blades or screens in the throat of the venturi. This will provide a surface area on which the liquid will impact and shatter or break up into droplets and micro-droplets. As the gas exits the venturi the velocity will decrease and some of the pressure drop will be recovered.

In other examples disclosed herein, continuous packs of corrugated and/or flat screens fill the full diameter of the absorber vessel. These "packs" would be held in place by supporting rings and grids and solvent would be dispersed evenly onto the top of the packs using any one of a number of conventional liquid distributors.

The use of the above techniques together in combination provides, for the first time known to applicants a universal absorber that can be utilized with virtually any gas and liquid. The combined use of:
- a continuously regenerated reaction surface area created by rapidly and continuously forming droplets and bubbles, bursting bubbles and fragmenting or shattering droplets to form further micro-droplets;-
- maintaining a maximized concentration gradient over the entire reaction surface during the entire reaction time period; maximizing the time period of the reaction by use of concurrent flow; and
- utilizing "solvent pulsing" to enhance efficiency;
results in forming a new universal absorber that overcomes the above noted limitations of prior art absorbers.

A primary object of the invention is to provide an absorber utilizing some or all of the features described in the preceding paragraph to improve absorption efficiency.

In examples which are not in accordance with the present invention, an array of properly placed tubes is used in the reaction chamber to prevent chanelling of plumes, increase overall efficiency and to allow the use of large, efficient froth reaction chambers (more than 15 meters in diameter for a cylindrical chamber).

A further object of the invention is to provide an absorber capable of use with large reaction chambers, but which eliminates channeling. Other objects will become apparent from the following description and drawings.

### BRIEF DESCRIPTION OF DRAWINGS

Fig. 1 is a schematic illustration of an example absorber which is not in accordance with the present invention, this absorber is referred to herein as a "flooded tube gas absorber" (FTGA), shown in a sectional view;
Fig. 2 shows a single corrugated screen;
Fig. 3A shows a single corrugated or ridge shaped screen;
Fig. 3B shows a plurality of corrugated screens;
Fig. 3C shows two venturi shaped absorption tubes;
Fig. 3D shows a plurality of sinusoidally shaped screens in an absorber tube;
Fig. 3E shows a screen pack using corrugated screens together with a rectangularly shaped cross-section screen;
Fig. 3F shows a screen pack with misaligned, sinusoidally corrugated screens;
Fig. 3G shows a screen pack with variable spacing of filaments of each screen;
Fig. 3H shows a screen pack with dome shaped corrugated screens;
Fig. 3K is a perspective view of a screen having a truncated cone shaped cross-section;
Fig. 3L is a cross-section of an absorber tube with three vertically spaced apart screen assemblies;
Fig. 4A shows an absorber tube with a row of rectangularly shaped holes;
Fig. 4B illustrates two tubes with their tops aligned;
Fig. 4C shows an absorber tube with a notched top over which solvent flows;
Fig. 4D shows an absorber tube with a series of holes formed on a horizontal line in its side wall through which solvent flows;
Fig. 4E shows an absorber with two horizontal, vertically spaced apart rows of holes;
Fig. 5 is a schematic cross-section of an alternate absorber wherein "full diameter" screen packs are utilized;
Fig. 6 shows a screen pack utilized in the absorber of Fig. 5;
Fig. 7 is a schematic cross-section of an alternate absorber, having a horizontal reaction chamber;
Fig. 8 is a schematic cross-section of a further example showing an altemate, horizontal reaction chamber;
Fig. 9 illustrates an alternate absorber design utilizing pressurized solvent;
Fig. 10 is a schematic cross-section of an example which is in accordance with the present invention, wherein no absorber tubes or bulkhead plates are utilized; rather a conventional solvent distributor provides solvent to a plurality of spaced apart, square shaped screens;
Figs. 11A-11F illustrate how the technique of "solvent pulsing" with the dynamic, rapidly changing absorption surface;
Figs. 12-18 illustrate various screen cross-section designs may be utilized with absorbers described herein.
Figs 19A - 19F illustrates one theory of how solvent accumulates and how solvent pulses are created; and
Figs. 20A-20E illustrate a second theory of how the solvent accumulates and how solvent pulses are created.

### DETAILED DESCRIPTION OF THE DRAWINGS

### DESCRIPTION

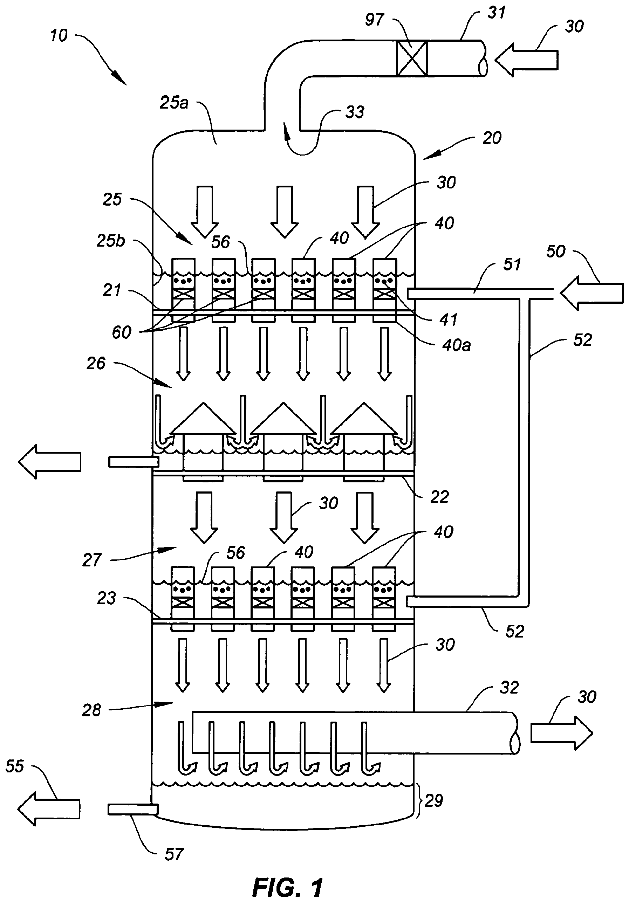

Fig. 1 shows a first example which is not in accordance with the present invention, referred to herein as a "flooded tube gas absorber" (FTGA). It includes a reaction or absorber vessel 20 which as shown is a cylindrical, vertically extending vessel, which may, in some uses, exceed 15 meters in diameter. Reaction or absorber vessel 20 may be virtually any shape, and have cross-sections which are circular, oval, rectangular, polyhedral, or other shape.

An incoming, flow gas stream 30 such as flue gas from a fossil fuel power plant, flows into inlet duct 31 connected to inlet port 33 at the top or upper end of vessel 20. Gas stream 30 contains a selected component, such as CO2, for example, in the case of a flue gas stream, to be absorbed. Incoming flowing gas stream 30 flows downwardly through reaction or absorption vessel 20, and after being subjected to the absorption process described herein, is discharged through outlet duct 32.

Reaction vessel 20 has a first chamber 25 and a second chamber 26 separated by bulkhead plate 21 extending horizontally across vertical reaction vessel 20. First chamber 25 is fluidly connected to gas inlet duct 31 to allow flow of pressurized gas stream 30 into first chamber 25. Bulkhead plate 21 extends across outlet end 25b of first chamber 25 to separate first chamber 25 from adjacent second chamber 26.

A plurality or array of discrete, vertically oriented absorption tubes 40 is carried in respective flow ports 40a formed through bulkhead plate 21. Each of the absorption tubes 40 extends through bulkhead plate 21 into first chamber 25 to define a respective conduit for the flow of gas stream 30 from first chamber 25 into second chamber 26. These tubes being of any one of a number of possible geometric shapes. The flow ports 40a and absorption tubes 40 are sized and positioned to equalize the flow speed of gas stream 30 downwardly through each absorption tube 40 from first chamber 25 into second chamber 26.

Fan 97 constitutes means for pressurizing gas stream 30 in first chamber 25 to cause a back pressure in chamber 25, which in turn causes gas stream 30 to flow at substantially the same, equal flow rates through each of the absorption tubes 40 into second chamber 26.

As shown in Fig. 1, an optional second bulkhead plate 23 (identical to plate 21) is placed below first bulkhead plate 21 to form an additional set of chambers 27 and 28 which are identical to the chambers 25, 26.

An array of discrete, vertically oriented absorber tubes 40 are densely mounted to and carried in flow ports 40a in the bulkhead plates 21 and 23. The gas absorber tubes 40 are mounted perpendicular to the plates 21, 23 and parallel with the vertical axis of the vessel 20. The number of gas absorber tubes required on each stage is dependent of the gas and liquid flow. Each stage may include one tube or many thousands of tubes. Each of the absorption tubes 40 extends through bulkhead plate 21 to define a respective conduit for the flow of gas stream 30 from first chamber 25 into second chamber 26. The tubes 40 and ports 40a carrying tubes 40 are sized and positioned to equalize the flow speed of gas stream 30 downwardly through each tube from first chamber 25 to second chamber 26.

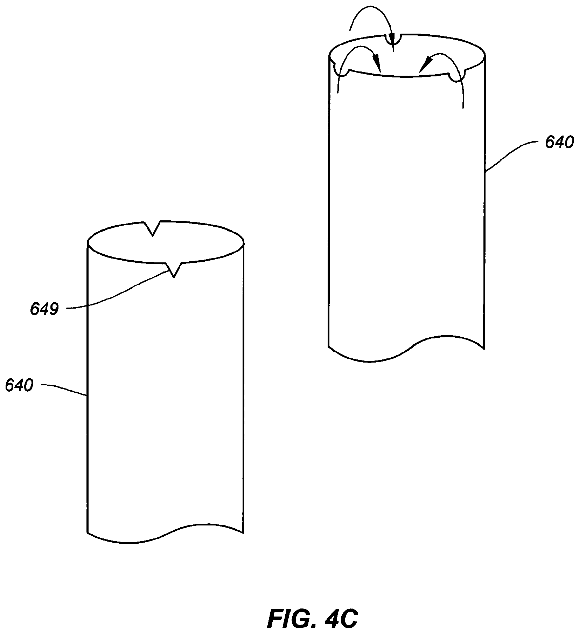

Lean liquid solvent is fed into the absorber above plate 21 by inlet lines 51 to flood the space above bulkhead plate 21 and between the tubes 40 forming a solvent reservoir 56. Liquid solvent 50 may be any solvent capable of absorbing the selected component, CO2, in the example given. Each tube 40 carries a screen assembly 60 described below. Solvent then is injected through holes and/or the slots 41 into each of the tubes 40 onto a screen assembly (or froth generator) 60 to mix with the gas stream 30 and establish froth droplets and bubbles (both not shown for clarity). Alternatively solvent may simply flow over the top of the absorber tubes negating the need for holes or slots. In these cases the top of the tubes may have notches (Fig.4C) to allow the solvent to drain at set points into the tube or the tube lip may be even creating an even solvent flow over the entire top of the tube. Each of these techniques injects liquid solvent into each of the absorption tubes 40 and through a plurality of mesh screens 60 provided in each tube 40 to form an aqueous bubbly froth from said liquid solvent inside each of the absorption tubes 40 as gas stream 30 flows through the tube 40. Each mesh screen extends transversely between side walls of each tube 40.

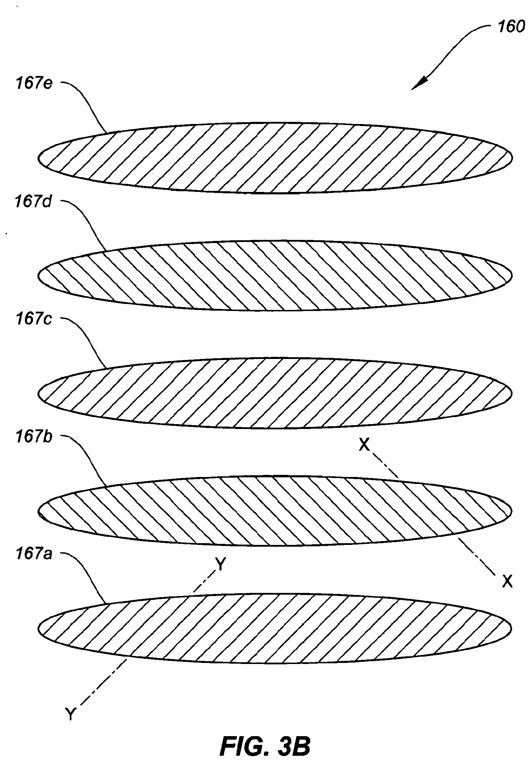

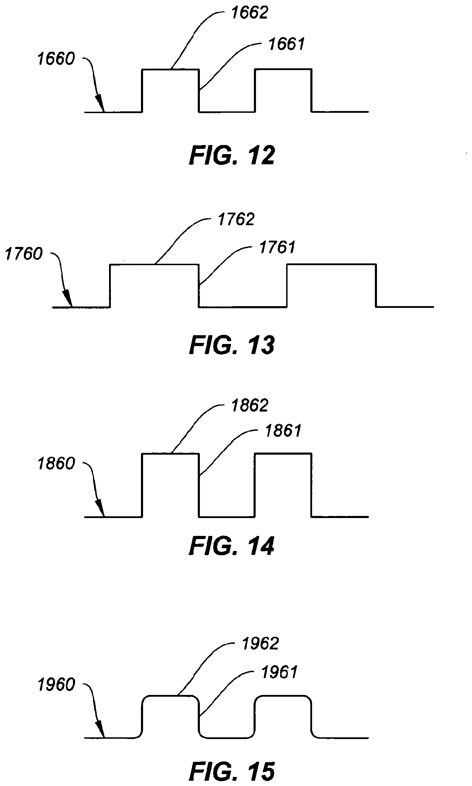

Each tube is fitted with an array of screens as described later. These screens act to burst, shatter, fragment or break up the bubbles in the aqueous froth into a myriad of droplets and micro-droplets of different radii which creates a very large, rapidly changing solvent surface, as described in detail in U.S. Patent No. 7,854,791. The screen assemblies shown in Figs. 3B, 3D-3L, 6, 10A may be utilized in tubes 40. Each of those assemblies has a plurality of vertically spaced apart mesh screens. Each screen may have any of the cross-sections shown in Figs. 12-18, as well as any ridge shaped screen as described below.

The injection of solvent into each of the absorption tubes may be done by various techniques described herein, all of which will form an aqueous froth in each absorption tube, in a manner that the screen assemblies cause bubbles in the froth to burst, reform, and burst repeatedly to form numerous micro-droplets of different radii, thereby creating a rapidly changing surface area for absorption.

In some cases in order to deliver the leanest solvent to each stage the lean solvent may be fed directly to each stage (line 52). In this case there would be a separate lean solvent feed line to each stage and a separate dehydration stage below each absorber stage.

Where separation of the gas and liquid is required, multiple liquid/gas separators are mounted directly below the tubes. One possible form of these separators is shown, but others exist. The passageways through the liquid/gas separators establish fluid (gas) communication between the initial dewatering chamber 26 and a next absorber stage 27 of the absorber vessel. In this step the liquid falls and settles into the space between the separators and can then be drawn off as a continuous liquid stream through a rich solvent drain line 53 to be regenerated into lean solvent. The gas 30 in turn passes through the separator tubes and into the next absorber stage. The need to remove the liquid absorbent after each absorber stage is dependent on the requirements of each application.

In other cases all the lean solvent will enter the absorber via a single line at the top of the absorber and will pass through the multiple stages of the absorber to be removed at the bottom or absorber sump.

The gas and liquid leaving the tubes flows into the next stage in the absorber.

In applications where liquid absorbent removal is not required, the partially spent absorbent from the first stage will fall into the liquid-absorbent reservoir of the next stage, and in-turn enter the gas absorber tubes.

The final dehydration stage 28 includes a rich-solvent reservoir 29 in the bottom of the vessel 20. A horizontal gas outlet duct 32 projects through the vessel wall in the final dewatering chamber to allow the gas 30 to leave the absorber vessel 20.

Fresh or lean solvent 50 is delivered to the absorber through inlet line 51 and in the case of multiple inlets 52 and others.

Rich solvent 55 (the solvent already used to absorb components from the gas) exits through drain 57 at the bottom of vessel 20 and is directed to a solvent regeneration system which is not the subject of this patent application.

The solvent regeneration system uses heat and/or a vacuum to strip the component which has been removed from the gas stream from the solvent so that the regenerated solvent can in turn be reused in the absorber.

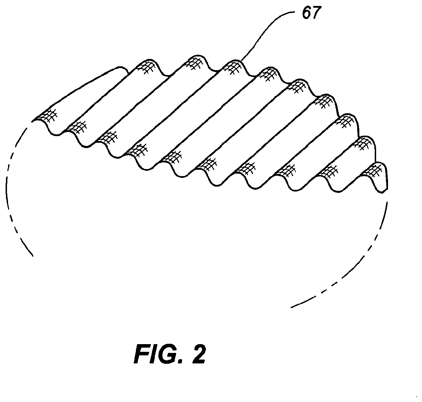

Fig. 2 illustrates a single, circular corrugated screen 67 which may be used as an alternate to flat screens shown and described below.

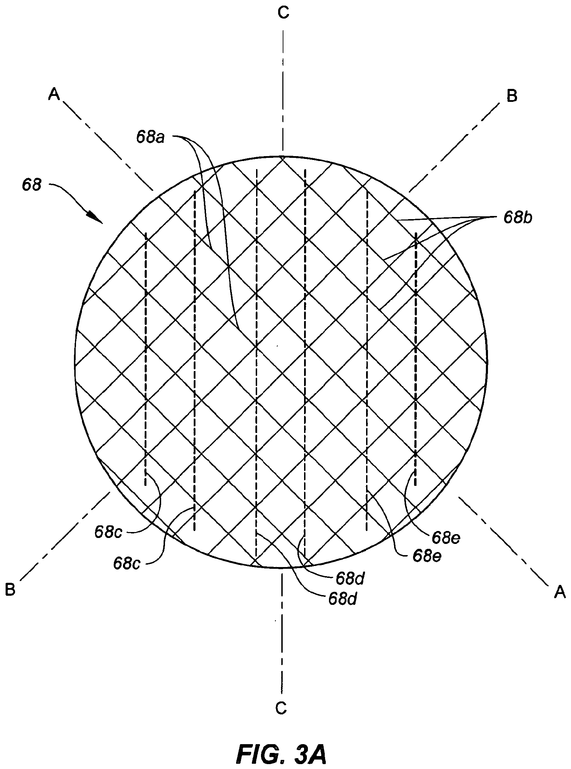

Fig. 3A illustrates a circular screen 68. The mesh filaments 68a and 68b are woven perpendicularly to each other and have linear axes A-A and B-B. Ridges 68c, 68d and 68e are formed in screen 68, having axes C-C. The axes of C-C ridges 68c-68e preferably form a 45° angle with the linear axes A-A and B-B of screen filaments 68a and 68b, respectively.

Fig. 3B shows a screen assembly 160 where corrugated screens 167a-167e are used. The assembly may consist of flat or corrugated screens or a combination of both types. It is significant to note that the axes of the corrugations in screens 167a-167e are rotated relative to each other. For example, the axis X-X of the corrugations of screen 161b is rotated counterclockwise about 45° relative to the axis of corrugations Y-Y of screen 161a. Adjacent screens are preferably offset or rotated so that their axes of rotation are offset between 45° and 90°, and most preferably from 60° to 80°.

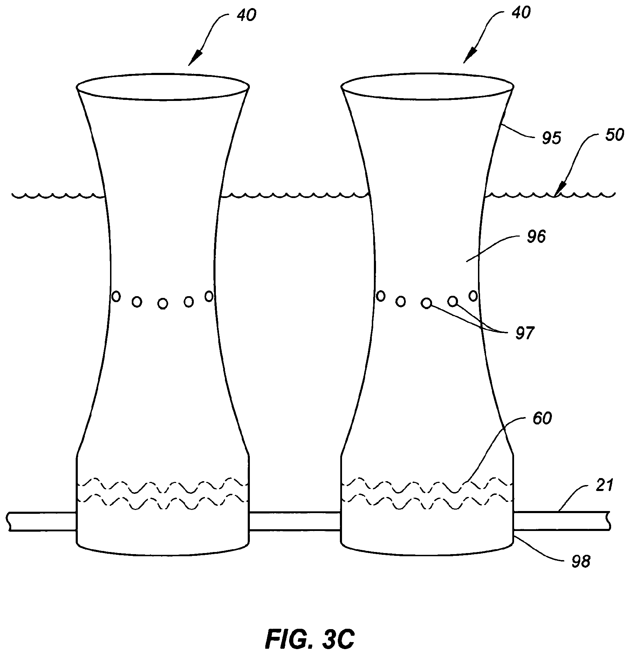

Fig. 3C shows a further variation where screens are used together with a venturi tube 95. The venturi creates a low pressure area inside the throat 96. Holes 97 around the throat allow accumulated solvent 50 to be drawn into the throat area in the form of a spray. Additional devices may be mounted in the throat of the venturi to promote this spray effect. This will create a myriad of droplets and hence a high surface area for mass transfer. An array of screens 60 is mounted inside the lower portion 98 of venturi tube 95

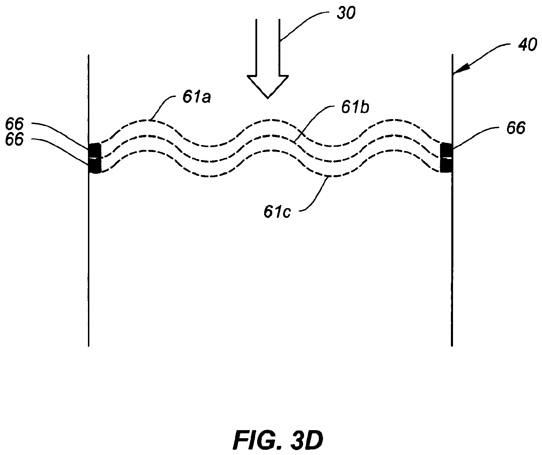

Figs. 3D- 3L show various design concepts of screen assemblies or screen packs that would be carried in each of the absorber tubes 40. It is significant to note that the design of screen assemblies will vary depending on significant to note that the design of screen assemblies will vary depending on the specific application. Some of the design variables are described and shown below.

Fig. 3D shows a plurality of corrugated mesh screens, each 61a, 61b, 61c having a generally sinusoidal cross-section, wherein each screen in the array is identical, wherein the corrugations are aligned, the screens are separated by peripheral spacers 66 (as opposed to perforated plates) and wherein the spacing between the screen filaments of each screen is uniform.

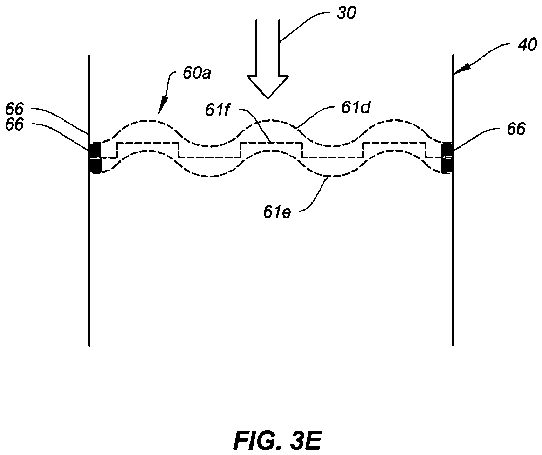

Fig. 3E shows a screen pack 60a wherein sinusoidally corrugated screens 61d, 61e are used together rectangularly corrugated screens 61f with herein the screens are separated by spacers 66.

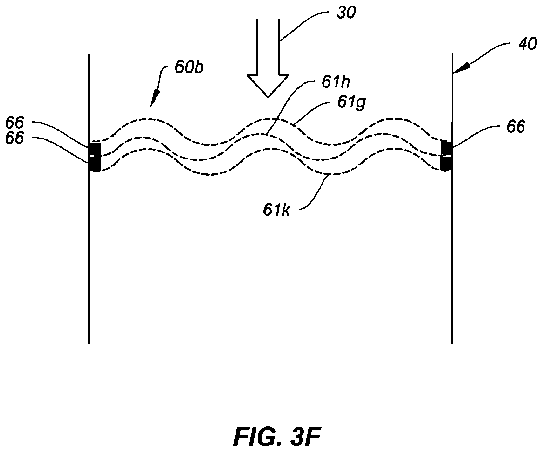

Fig. 3F shows a screen pack 60b wherein sinusoidally corrugated screens 61g, 61h and 61k are intentionally misaligned or offset relative to the flow path of gas stream 30, and are separated by peripheral spacers 66.

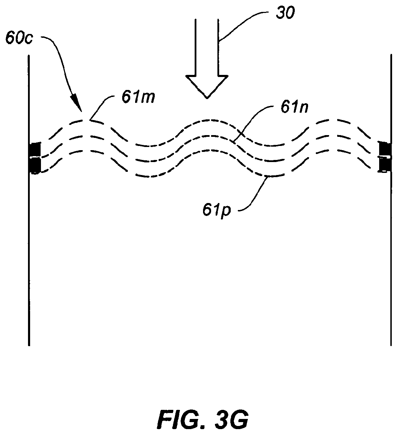

Fig. 3G shows a screen pack 60c wherein sinusoidally corrugated screens 61m, 61n, 61p are aligned, but wherein the spacing between screen filaments is closer near the center of the absorber tube and is greater near the side walls of the absorber tube, to assist in equalizing the flow rate of gas stream 30 over the cross-section of each absorber tube.

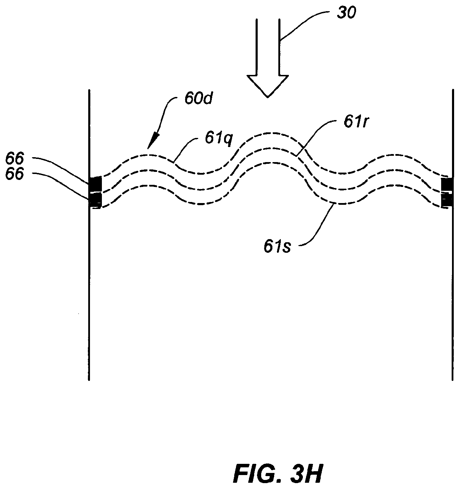

Fig.3H illustrates a screen pack 60d utilizing generally "dome shaped" corrugated screens 61q, 61r, 61s separated by peripheral or circumferential spacers 66.

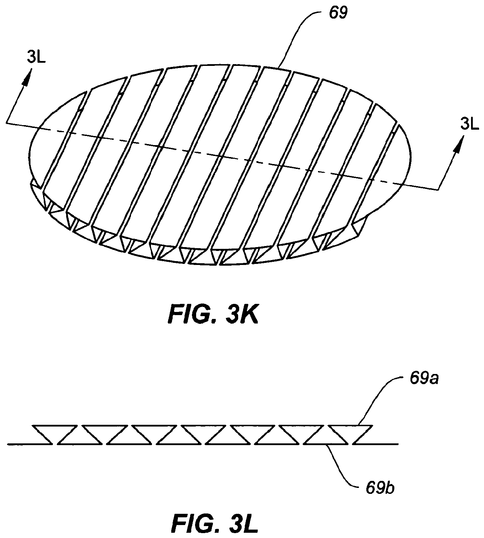

Figs.3K and 3L illustrate an alternate screen design wherein screen 69 of Fig.3L has a cross-section shown in Fig.3L. The cross-section includes a pattern of truncated triangular shapes 69a and 69b that provide strength as well as large surface areas to maximize break up or fragmentation of bubbles and droplets.

The screens (or meshes) and screen (or mesh) assemblies shown in Figs. 2 through 3L form or generate the solvent froth and cause bubbles in the froth to burst and form numerous micro-droplets of different radii, creating a rapidly changing surface area for absorption.

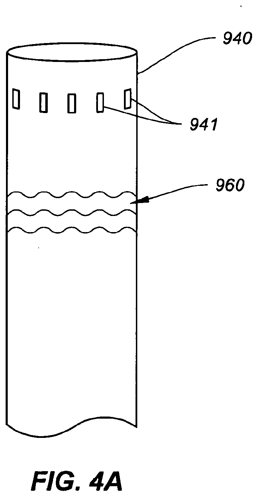

Fig. 4A-4E illustrates various absorber tube designs. Each of these absorber tubes can be utilized with various screen assembly designs inside the absorber tube. Each of these tube designs, working together with solvent reservoir 56 (Fig. 1) comprise means for injecting liquid solvent 50 downwardly into each absorption tube 40.

Fig. 4A illustrates a tube 940 having a row of rectangular slots 941 formed in its side wall; solvent flow through slots into tube 940. Screen assembly 960 is mounted inside tube 940 below row 941.

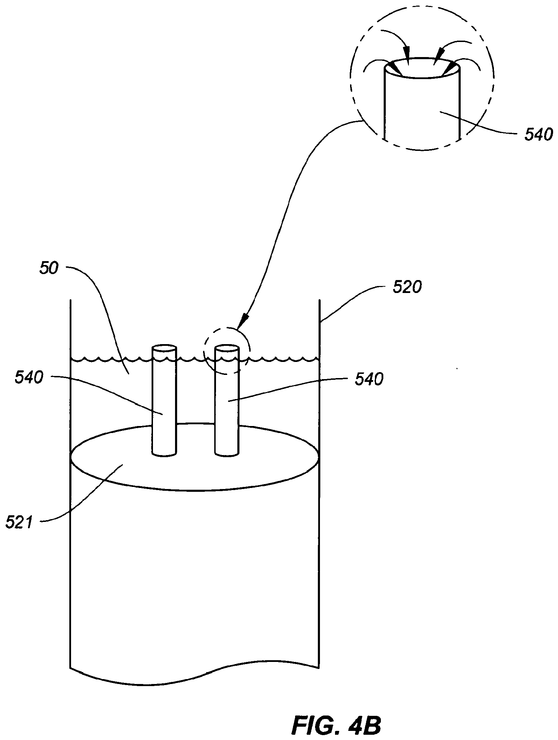

Fig. 4B illustrates an absorber tube 540 design wherein the tops of tubes 540 are aligned horizontally, and solvent simply flows into the top of each tube as shown by the insert in Fig. 4B.

Fig. 4C illustrates two absorber tubes 540 wherein notches are formed in the top of the tubes, allowing solvent to flow through the notches into the tube. Tubes 540 extend above bulkhead 521 in reaction vessel 520.

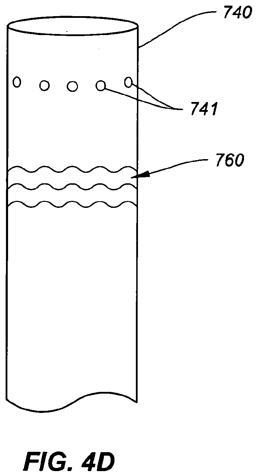

Fig. 4D illustrates a tube 740 with holes 741 formed in the side wall of the tube; solvent flows through holes 741 into the tube 740. A screen assembly 760 with three corrugated screens 761a, 761b and 761c is mounted inside tube 760 below holes 741.

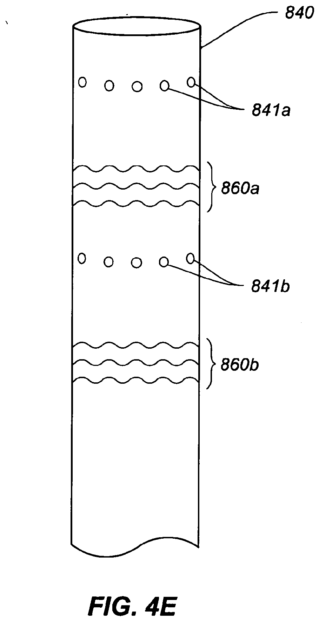

Fig. 4E illustrates a tube 840 with two, horizontal, vertically spaced apart rows of holes 841a and 841b. Screen assemblies 860a and 860b are mounted inside tube 840 below rows 841a and 841b, respectively.

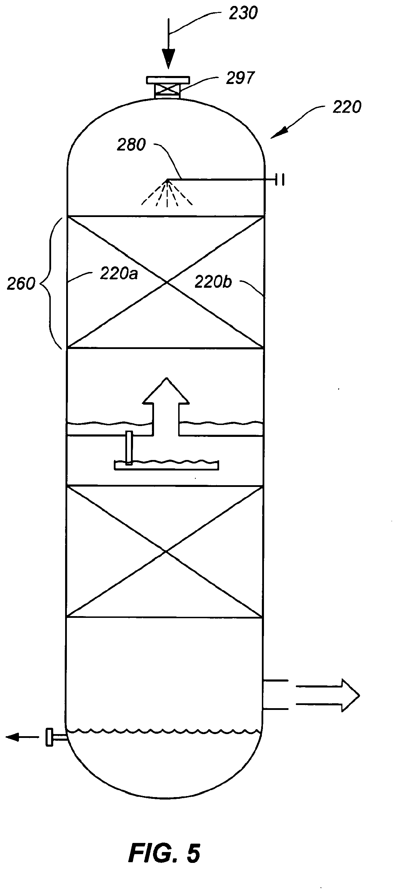

In yet another example the tubes may be replaced altogether with continuous packs of corrugated and/or flat screens which fill the full diameter of the absorber vessel. These "packs" would be held in place by supporting rings and grids and solvent would be dispersed evenly on to the top of the packs using any one of a number of conventional liquid distributors. This example is referred to as herein as the "Full Diameter Screen" example, and is shown in Fig. 5 below.

Fig. 5 shows a reaction vessel 220 through which a gas stream 230 flows. Rather than using the array of absorber tubes 40 as shown in Fig.1, the example shown in Fig. 5 uses "screen packs" 260 in which the individual screens extend from side wall 220a to side wall 220b. A liquid distributor 280 distributes solvent evenly over the top of "screen pack" 260. In other respects the absorber vessel 220 is the same as vessel 20 of Fig.1. Fan 297 pressurizes gas 230 as it flows through vessel 220.

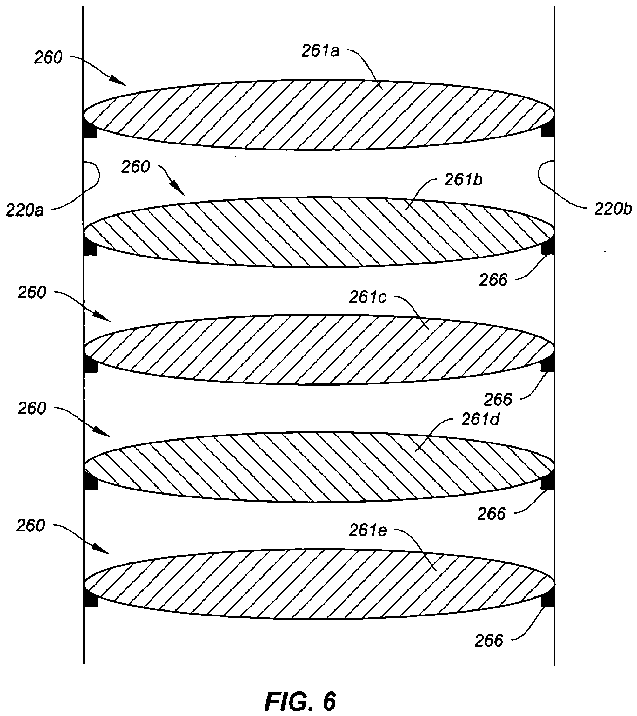

Fig. 6 shows schematically how "screen pack" 260 is positioned between walls 220a and 220b of vessel 220 shown in Fig. 5. Each of the screens 261a-261e is corrugated preferably and the axes of corrugation are offset as much as 90° from adjacent screens. Screens 260 are held in place by supports 266.

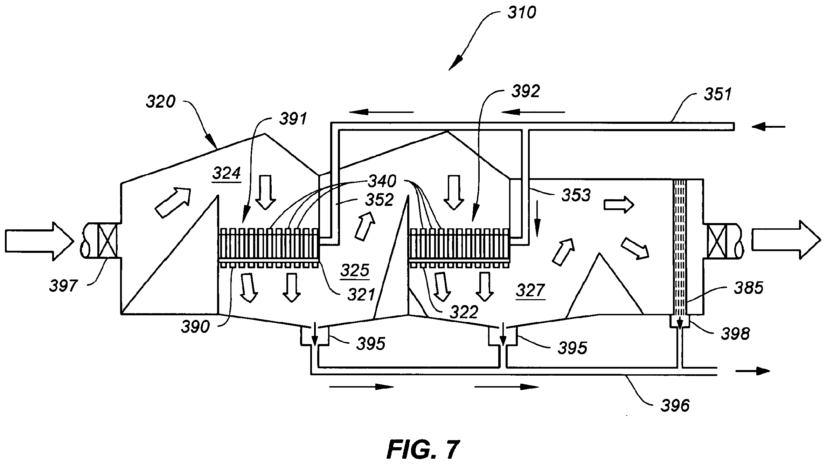

A horizontal-flow absorber 310 (HFA) illustrated in Fig. 7, is an alternative example of the FTGA shown in Fig.1. The HFA consists of an absorber vessel 320 with a horizontal linear axis. Bulkhead plates 321, 322 mounted perpendicular to the linear axis divide the absorber vessel into multiple reaction chambers 324, 325, 327, or stages. Fan 397 pressurizes the interior of vessel 320.

Multiple gas absorber tubes 340 are densely mounted perpendicular to each bulkhead 321, 322 and parallel with the linear axis of the vessel 320, forming two gas absorber-tube plates 391, 392. Each absorber-tube plate 391, 392 forms an additional reaction chamber 325, 327, or stage, along the linear axis of the absorber vessel 320. The number of gas absorber tubes 340 required on each stage is dependent of the gas and liquid flow. Each stage may include one tube or many thousands of tubes. The absorber tubes establish fluid communication between the first reaction chamber 324 and the second or next sequential reaction chamber 325 along the linear axis of the absorber vessel.

Lean solvent is fed through inlet line 351 to the feed header for each stage of the absorber through lines 352, 353.

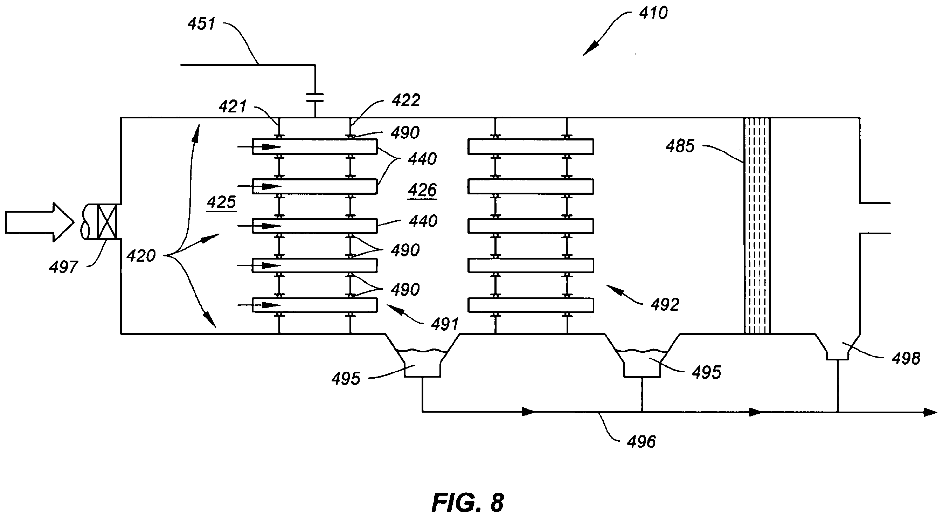

There are two potential horizontal arrangements represented by Fig. 7 and 8. In Fig. 7 flooded tubes 340 are used mounted in a horizontal plane as in the case for the vertical absorber. The tubes 340 are fitted in bulkhead headers 321, 322 and a gas liquid seal created via an O-ring seal 390; but other seals known in the art may be used. This header allows the solvent feed through inlet 351 to the tubes to be pressurized such that a uniform spray of solvent into the tube 340 cross section is achieved despite the tube being in the horizontal plane.

This same pressurized arrangement can also be used for vertical absorbers.

A rich-solvent sump 395 is located immediately downstream of each stage. A rich solvent drain pipe 396 is connected to the sumps 395 for joining each stage. In the case where the absorber is operating at low pressure a rich-solvent pump (not shown) will be required to pump the rich solvent to the regeneration system (not illustrated). Where the absorber is operating at pressure the rich solvent will be able to flow under the absorber pressure to the regeneration system.

A mist eliminator 385 is located downstream from the final absorber-tube plate. The cross-sectional area of the mist eliminator is mounted perpendicular to the linear axis of the absorber vessel. Solvent drain ports are located in the bottom of the absorber vessel, directly below the mist eliminator. A mist eliminator sump 398 is mounted to the demister. This sump is connected to the rich-solvent drain pipe 396.

Fig. 8 illustrates a horizontal flow absorber 410 utilizing a first stage 491 having horizontally mounted tubes 440, sealed at each end by O-rings (or other seals known in the art) 490. Bulkhead plates 421 and 422 extend vertically across the cross-section of horizontal reaction chamber 420. Feed or lean solvent is fed through line 451 into the region between bulkhead plates 421 and 422. Fan 497 pressurizes reaction chamber 420. First reaction chamber 425 is upstream of absorption tubes 440 and second reaction chamber is downstream of tubes 440.

A second identical stage 492 is preferably utilized, identical to first stage 491.

Drains 495 carry rich solvent to drain line 496. A demister mesh 485 is mounted downstream of second stage 492. Rich solvent from demister 485 is collected in drain 498 and then into drain line 496.

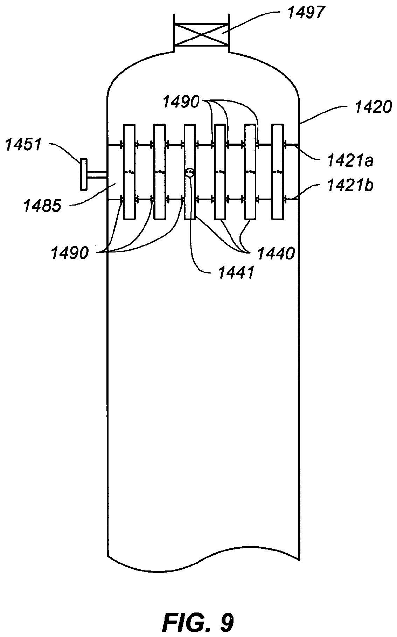

Fig. 9 illustrates an alternate example wherein a vertical arrangement of absorber tubes 440 in Fig. 8 can be modified for use as shown by tubes 1440 with the vertical vessel 1420 shown in Fig. 9. O-ring seals (or other seals known in the art) 1490 are either placed or welded between each absorber tube 1440 and bulkhead plates 1421a and 1421b. The chamber 1485 between bulkhead plates 1421a and 1422b is pressurized. Pressurized lean solvent is fed through line 1451 into chamber 1485 and into absorber tubes 1440 through openings 1441 formed in the walls of tubes 1440. Fan 1497 pressurizes vessel 1420.

### THE SOLVENT PULSING PHENOMENON

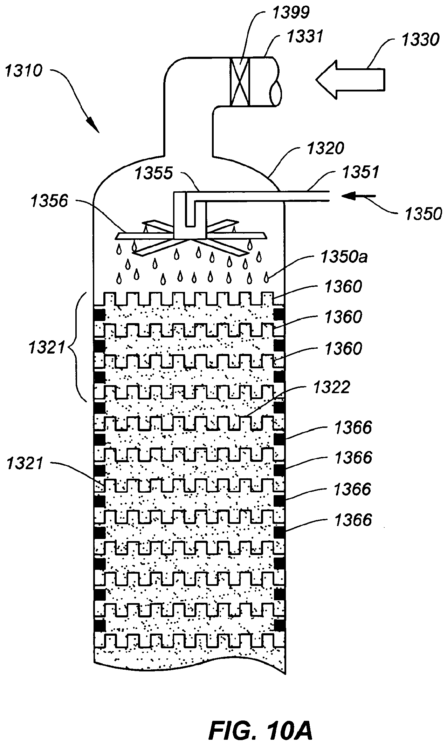

Fig. 10A illustrates an embodiment of the invention wherein the solvent pulsing phenomenon is utilized to increase absorption efficiency. The absorber shown generally as 1310 includes a vertically extending reaction vessel 1320 (only the upper portion of vessel 1320 is shown in Fig. 10A) Reaction vessel 1320 has an upper inlet 1331 into which incoming flowing gas stream 1330 flows. Fan 1399 pressurizes gas stream 1330 as it flows through vessel 1320. Gas stream 1330 flows downwardly through reaction vessel 1320 and is discharged through a lower outlet (not shown) after being processed in reaction vessel 1320.

Incoming flowing gas stream is pressurized by any conventional fan 1399 or other known device.

Reaction vessel 1320 carries a plurality of vertically spaced apart, ridge shaped screens 1360, wherein each screen extends transversely across said reaction vessel. The screens extend from sidewall 1321 to side wall 1322 and extend completely across the cross section of reaction vessel 1320. The screens are vertically spaced apart by spacers 1366. The screens are shown aligned for clarity, but are preferably offset in relation to each other.

A solvent injector 1355 mounted inside vessel 1320 near the top of the vessel distributes a liquid solvent 1350 that is fed in through inlet line 1351. As shown in Fig. 13A, the distributor has a spider type head 1356 which distributes liquid solvent 1350a downwardly into reaction vessel 1320.

The liquid solvent 1350a flows downwardly through reaction vessel 1320 co-currently with gas stream 1330.

The interaction of the incoming gas stream 1330 with the liquid solvent 1350a and screens 1360 creates an aqueous bubbly froth being intermixed with numerous micro-droplets formed from causing bubbles in the froth to burst, as described generally above and described in detail in U.S. Patent No. 7,854,791 and is not described here for the sake of brevity.

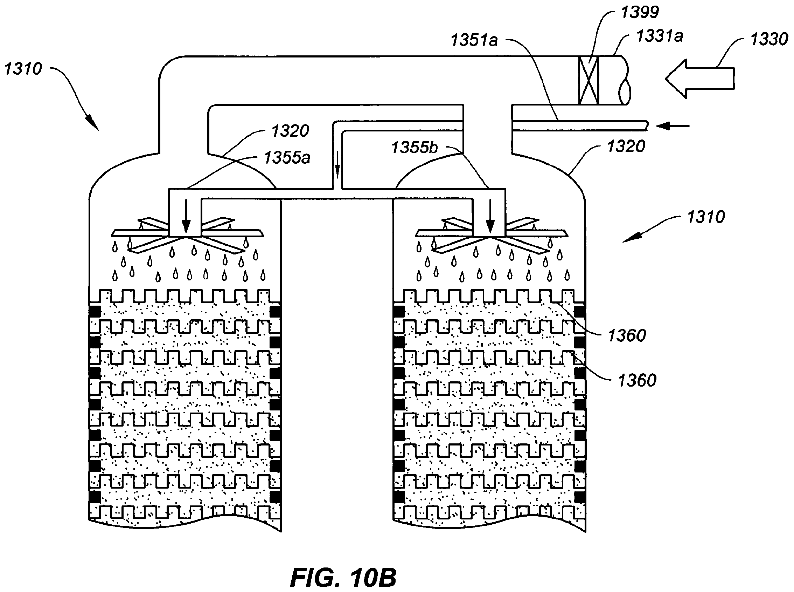

Fig. 10B illustrates the upper portion of two reaction vessels identical to reaction vessel 1320 of Fig. 10A fed by a common inlet duct 1331a. Solvent distributors 1355a and 1355b are identical to distributor 1355 of Fig. 10A, and are fed solvent 1350a by feed line 1351a. Fig. 10B shows that an array of absorbers such as absorber 1310 of Fig. 10A may be fed an incoming gas stream and solvent from common ducts and feed lines. Fan 1399 pressurizes gas stream 1330.

We have found that by utilizing "ridge shaped screens" of particular designs, together with certain flow rates of the incoming gas stream, we have identified a phenomenon described herein as "solvent pulsing." This phenomenon is illustrated schematically and described below and is used in the absorbers shown in Figs 10A and 10B. Solvent pulsing can also be used as an optional feature in all of the absorbers described herein.

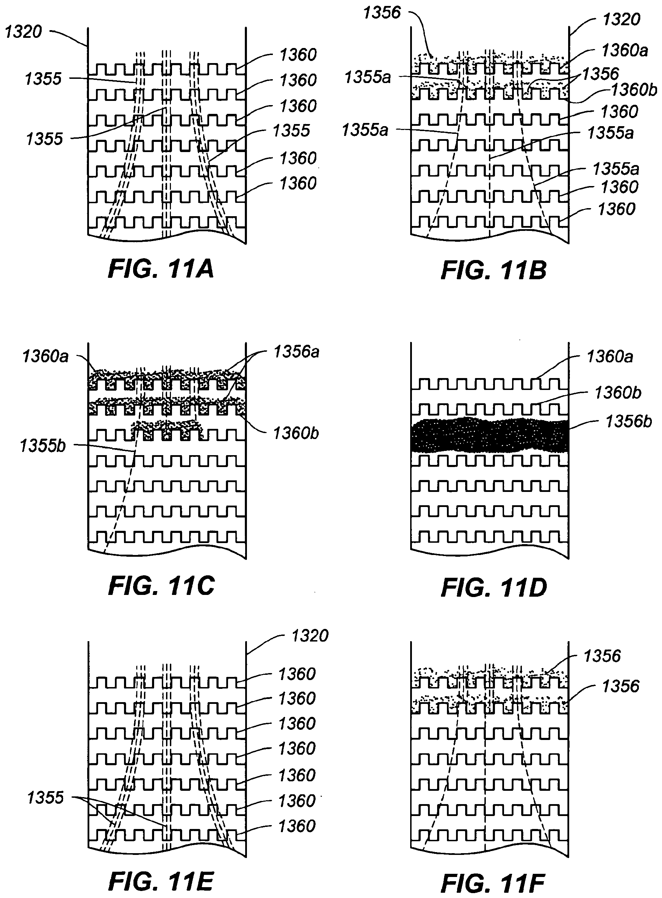

Figs. 11A-11F- are concept sketches, not to scale that illustrate the "solvent pulsing" phenomenon created in the upper portion 1321 illustrated in Fig. 10A. A section of screens 1360 near the top of reaction vessel 1320 are shown in 11A-11F. The screens 1360 are shown as being aligned for clarity, but are preferably offset as described herein.

Figure 11A illustrates solvent flow 1355 initially in the system. It is a trickle of solvent flowing down the column in a laminar fashion.

Figure 11B illustrates the beginning of solvent accumulation 1356 on the screens 1360a and 1360b. Accumulation occurs near the very top of the column and solvent flow rates 1355a decrease as a portion of the flowing solvent accumulates.

Figure 11C illustrates a near saturation of screens 1360a, 1360b with solvent froth 1356a, with the lowest solvent flow rate.

Figure 11D illustrates all the accumulated solvent 1356b being released from screens 1360a and 1360b and traveling downstream in a high velocity turbulent pulse.

Figure 11E illustrates flow returning to a similar fashion as in Fig.14A; once again a trickle of laminar solvent.

Figure 11F illustrates accumulation beginning again, as in Fig 14B; and the cycle repeats itself.

### SCREENS

The screens of the embodiments shown in Figs. 10A and 10B are fabricated from woven wire mesh or screens. The cross-sectional area of the screens is arranged perpendicular to linear axis of absorber tube so that the gas and liquid flow through each screen in sequence. The square-wave shaped screens consist of vertical ridge walls, flat ridge tops, and flat valley floors in order to reduce pressure drop and increase liquid-gas interfacial area. The linear axes of the screen mesh is aligned at a 45 degree angle to the linear axis of the ridges as shown in Fig. 3A above. The square-wave shaped screens increase liquid hold-up and introduce turbulence into the flow field. The square-wave screens enable pulsing of liquid structures, aeration of the liquid pulses, and froth matrix formation. The linear axes of the screen ridges of each screen are rotated between 45° to 90°, and preferably between 60° and 80°, in reference to the linear axis of the ridges of each upstream screen in order to keep the liquid phase distributed evenly over the cross-sectional area of the screens throughout the reaction chamber. The closely-spaced screens reform the reactant surfaces at high frequency in order to maximize fresh reactant surfaces exposed to the target gas.

In the embodiment of Fig. 10A, an assembly of ten (10) square-wave shaped screens with 16 x 16 openings/square inch, 0.040" apertures, 0.023" wire diameter, and 40% open area are separated by thin annulus shaped spacers, 0.25" thick, that support the screens around the periphery of the absorber tube. The 'pulse-generation' screen assembly enables fluid hold-up in the screens and initiation of the pulsing of liquid structures through the reaction chamber at operational conditions.

Square-wave shaped screens in the remainder of the reaction chamber have 14 x 14 openings/square inch, 0.046" apertures, 0.025" wire diameter, and 42% open area in order to propagate the pulses through the reaction chamber at lower pressure drop than pulse-generation screens and allow for optimal contact time between the gas and liquid phases.

### HOW PULSING IS ACHIEVED

Although overall liquid-gas molar flow rate ratios are comparable to conventional contactors, solvent volumetric flow rate in the absorber as described herein is not constant. Rather, solvent volumetric flow rate initially is low and a fraction of the solvent accumulates in the screens as described above. Upon reaching a critical saturation, a large fraction of the accumulated solvent travels downstream at high volumetric flow rate in a pulse. After the pulse, the solvent volumetric flow rate is low again until another pulse occurs. This repeats ad infinitum.

Screen specs for pulsing (Fig. 10A):

| | | | | | | |
|---|---|---|---|---|---|---|
| Openings/sq. in, | wire diameter, | | opening size, | | open area ratio | |
| 16 x 16 | - | 0.023" | - | 0.040" | - | 40% |

Pulse frequencies at 2.5 m/s Vgas:
Generation frequency - approximately 2 /sec
Regeneration frequency - approximately 60 /sec

### DEGREE TO WHICH PULSING ENHANCES ABSORPTION PROCESS

This pulsing is beneficial because at flow rates and liquid-gas ratios similar to that of conventional columns the Reynolds number for the liquid places it squarely in the laminar regime. However, because the absorber experiences the pulsing phenomenon, it greatly increases the volumetric flow rate during a pulse bringing it more in line with turbulent flow. There exists numerous literature that show turbulent flow causes better mixing, which increases the rate of mass transfer. Furthermore, high speed photography shows pulsing enhancing the formation of micro-froth. Literature also exists that show froth and bubble structures enhance contact area. The use of co-current flow and the geometry of the screens allow for these important solvent pulses to occur.

Screen specs. For propagation (Fig. 10A):
14 x 14 openings/square inch, 0.025" wire diameter, 0.046" opening size, 42% open area ratio
Approximately (4) ridges/inch across the diameter of the screens: 1/8" ridges and 1/8" valleys
e.g. - 4" diameter screen has 16 ridges
Ridge height .... 0.275" - 0.375"
Screens separated by 0.25" spacers

Figs. 12-18 illustrates various cross-sectional designs of "ridge shaped screens" which applicants believe will cause "solvent pulsing."

Fig. 12 is a square wave pattern, with the generally vertical segments 1661 of the same length as the generally horizontal or transverse to gas flow segments 1662.

Fig. 13 shows screen 1760 with a rectangular pattern with vertical segments have a smaller length than horizontal segments 1762.

Fig. 14 shows screen 1860 with a rectangular pattern wherein vertical segments 1861 are longer than horizontal segments 1862.

Fig. 15 shows screen 1960 with a dome shaped pattern have segments 1961 which are either vertical or plus or minus 20° from vertical, and horizontal segments 1962 of various lengths relative to the length of segment 1961.

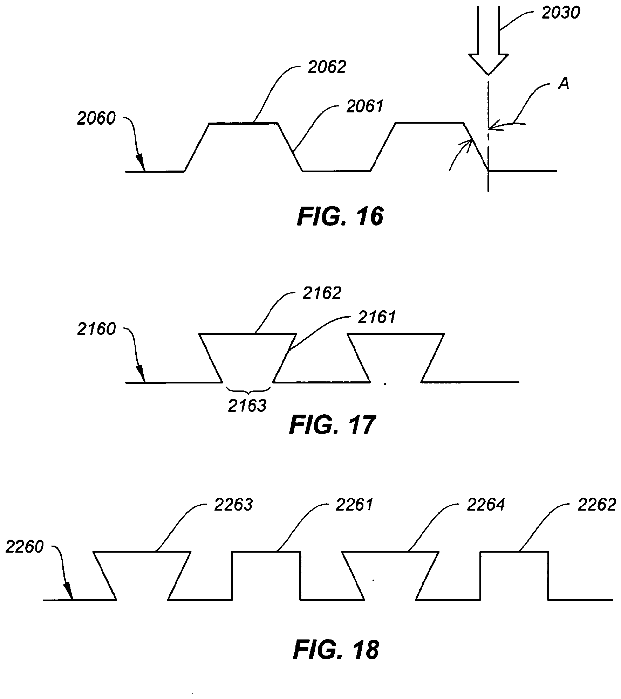

Fig. 16 shows screen 2060 with a truncated cone pattern, wherein generally vertical segments are within an angle A of 0° to 20° relative to the direction of gas stream 2030.

Fig. 17 shows screen 2160 having an inverted, truncated conical shape wherein generally vertical segment 2161 is within 20°of the direction of flow of the gas stream and horizontal segment 2162 has a greater length than the throat 2163 of the ridge formed by segment 2162 and two adjacent segments 2161.

Fig. 18 shows a screen utilizing a compound cross-section, using some square shaped segments 2261, 2262 and inverted, truncated cone segments 2263, 2264.

It is to be understood that Figs. 12-18 are by way of example, and numerous other "ridge shaped" screens may be utilized. It is believed that the screens must have somewhat vertical surface regions (i.e. regions which lie in planes within 20° of the direction of gas flow) that form side walls of a ridge and tend to accumulate solvent froth beneath the ridges, and open surface regions generally transverse to the direction of flow of the gas stream to allow velocity of the gas stream to increase significantly.

The applicants are not certain at this time how or why the "solvent pulsing" occurs.

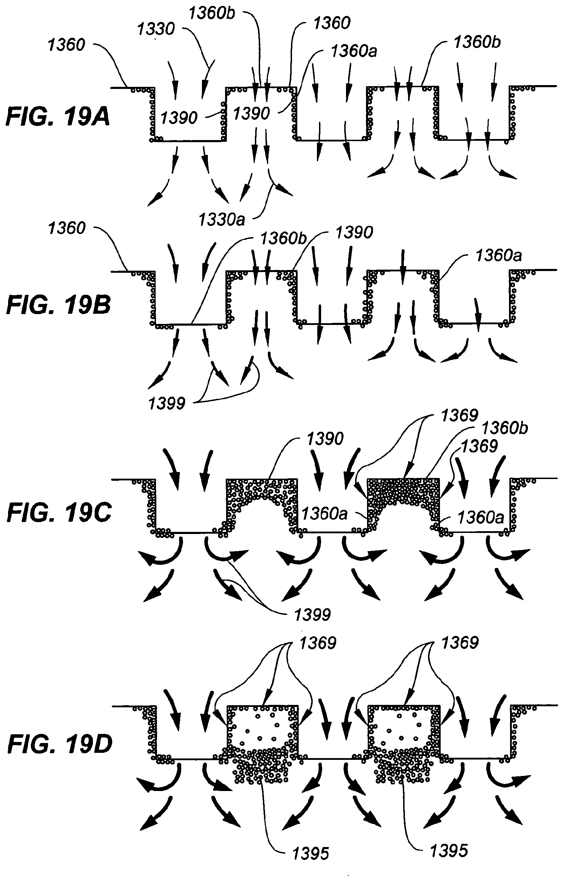

Figs 19A-19F illustrate one theory of how and why the pulsing occurs.

Figs. 19A-19F illustrate the "solvent pulsing" phenomenon created in screens 1360 illustrated in Fig. 10. A single screen 1360 is shown in Figs. 19A-19F as a solvent pulse is created in that single screen.

As shown in Fig. 19A, screen 1360 is referred to herein as a "ridge shaped screen." The phrase "ridge shaped screen" as used herein and in the claims refers to screens having a cross section in which regions of the screen's surface extend in substantially a direction parallel i.e. within 20°, of the direction of the incoming glowing gas stream. As shown in Fig.19A, screen 1360 has vertical regions 1360A that extend in a vertical direction, parallel with the direction of gas stream 1330. In addition, regions 1360b of the surface of screen 1360 have a surface extending in a direction transverse to the direction in which gas stream 1330 flows.

Fig 19A illustrates the first step in the "solvent pulsing" phenomenon. Aqueous froth comprising solvent bubbles and micro-droplets is accumulating, or holding up, on the "ridge" regions 1360a of screen 1360. Gas stream 1330 is flowing at a normal velocity through the open or transverse regions 1360b of screen 1360. Gas flow 1330a below or downstream of screen 1360 is turbulent.

As shown in Fig. 19B, more solvent froth 1390 accumulates on the "ridge shaped" regions 1360a, further restricting the open regions 1360b, which in turn causes the velocity of incoming gas stream 1330 to further increase, as shown by larger boldness of the arrows 1399 illustrating the flow of gas stream 1330. Turbulence of gas stream 1330 below screen 1360 increases.

Fig. 19C illustrates maximum hold-Up or accumulation of solvent froth on screen 1360. The solvent froth tends to accumulate along the ridge regions 1360a and below a "ridge" 1369 shown in Fig. 19C. Ridge 1369 includes two generally vertical ridge regions 1360a and an open region 1360b that extends between the top of ridge regions 1360a. Gas velocity and turbulence below screen 1360 in maximized.

Fig 19D illustrates the initial phase of "solvent pulsing." Clumps 1395 of solvent froth are torn from the underside of ridges 1369 and flow downwardly into the violent turbulence below screen 1360. The "solvent pulsing" shown in Fig. 19D maximizes 2 phase mixing between gas stream 1330 and solvent clumps 1395 and between gas stream 1330 and solvent bubbles and micro-droplets that are not part of clumps 1395.

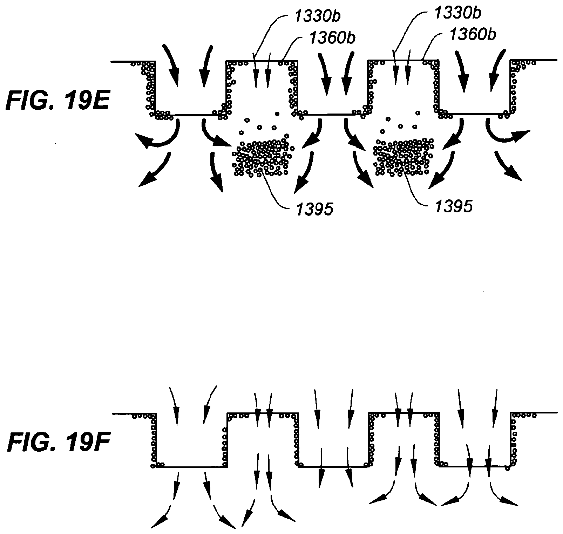

Fig. 19E illustrates the second phase of "solvent pulsing" wherein solvent froth clumps have moved downwardly below screen 1360 a sufficient distance that gas stream 1330b begins flowing through open regions 1360b. The clumps or pulses of solvent 1395 cascade downstream and increase solvent turbulence and 2 phase mixing downstream.

Fig. 19F illustrates the status of gas stream flow and solvent froth accumulation returning to the state shown in Fig. 19A after the solvent pulses or clumps 1395 have moved downstream. The cycle shown in Figs. 19A through 19F repeats itself continually so long as the requisite conditions of gas stream flow and solvent froth flow remain in effect.

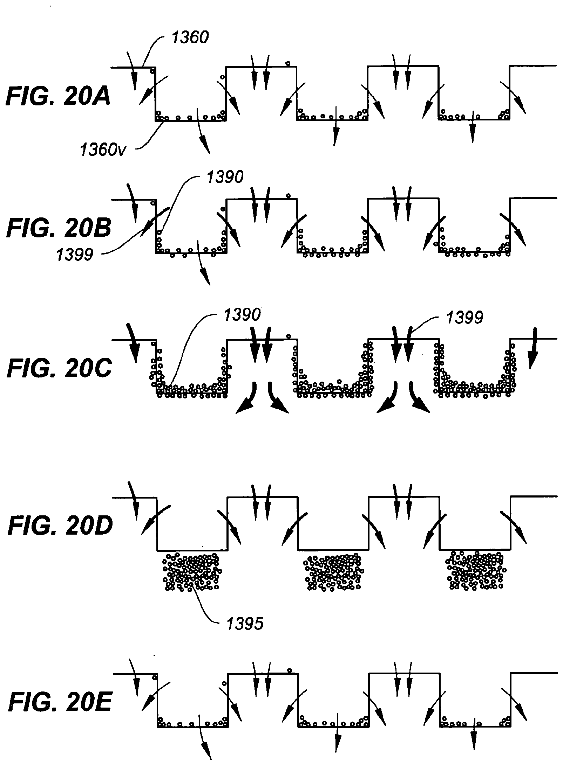

Figs. 20A-20E illustrate a second theory of how the solvent pulse is created. This theory essentially proposes that the solvent accumulates in the valley sections 1360v of screen 1360 due to surface tension. As the solvent accumulation 1390 increases, the gas stream velocity, shown by arrows 1399, increases as the gas stream flow through the reduced open regions of screen 1360. Fig. 20D shows how the solvent pulses 1395 are separated from screen 1360, and move downwardly in the reaction chamber. As shown in Fig. 20E, after the solvent pulse or pulses separate from screen 1360, gas and solvent flow return to normal as shown in Fig. 20A. The cycle then repeats itself.

### TECHNICAL DESCRIPTION OF PROCESS

Gas/liquid absorption is a very common chemical process for using a liquid absorbent to remove a component from a gas stream or vice versa. Absorbers are used in natural gas processing, oil refining, chemical and petrochemical industries, pharmaceuticals, fertilizers, etc. Applications include;
- Removal of contaminants such as CO₂, H₂O, or H₂S from gas streams
- Removal of contaminants from a liquid stream using gas as the absorbent

The absorbers shown and described herein can be used in all gas/liquid absorption applications.

Conventional absorbers use an absorbent solvent and packing to create surfaces through which mass transfer occurs. Liquid absorbent enters at the top of the absorber vessel and is distributed evenly across the full cross-sectional area of the packing using mechanical distributors. There are several types of packing, including random and structured. Random packing is made up from individual pressed metal, ceramic, or plastic shapes that are randomly dumped onto a support tray in the absorber creating a "packed bed". Structured packing is corrugated segments of metal or plastic formed into a structure with intricate surface area, located inside the absorber.

Alternatively, absorbers may use trays or plates which force contact between the target gas and solvent. A trayed absorber uses perforated plates, bubble caps or a valve tray to allow the gas to bubble up through the liquid absorbent to facilitate mass transfer. Mass transfer occurs as the absorbent liquid, draining downward from the top, contacts the target gas, flowing upward from below, as the gas bubbles through the perforations..A third type of absorber is a "spray tower" where the liquid absorbent is sprayed downward to create small droplets, thereby creating surfaces for mass transfer. The solvent droplets fall downward as the gas flows upward through the tower.

Large diameter absorbers (15m) for gas/liquid absorption have difficulty maintaining an even and consistent gas and liquid flows over the cross-sectional area of the absorber. This results in channeling of the gas flowing upward through the liquid absorbent flowing downward, which in turn, leads to poor mass transfer.

The gas passes down through the screens mixing with the liquid and in doing so shatters or ruptures the solvent into a myriad of droplets which create a very large surface area for mass transfer. But instead of leaving the small droplets intact in a confined space which would produce a relatively static, fixed surface area similar to prior art devices, the present invention continuously and violently ruptures or fragments and reforms the droplets at a rapid rate. Some bubbles also form which in turn are caused to burst forming thousands of microscopic droplets from each bursting bubble, whereby the active surface area of the liquid solvent is further increased. This high frequency and continuous regeneration of the surface of the liquid solvent is a significant aspect of the invention. An enormous reaction surface is created in a small volume. The reaction surface is continuously and violently ruptured and reformed to maximize the efficiency of the mass transfer.

The Absorber example incorporates multiple gas absorber tubes in a modular design. The absorber tubes are optimized for consistent gas and liquid flow over the tube's cross-sectional area. The cross-sectional area of the absorber tubes can be cylindrical, square, rectangular, triangular or polyhedral. The exact shape is optimized for each application. The gas absorber tubes can be made out of metals, plastics, or ceramics to suit the process conditions. The individual gas absorber tubes are densely mounted onto, or through, horizontal bulkhead plates that divide the reaction chamber into vertical stages. A portion of the flow passes through each of the absorber tubes, maintaining consistent even flow over the cross-sectional area of the reaction chamber. This is just one feature of the design.

One application of the absorbers described herein is the removal of CO₂ from a gas stream. In this application it is anticipated that precipitating solvents will be more economical than non-precipitating solvents for large scale CO₂ capture, however in conventional packed-bed absorbers, the intricate structure and tortuous passageways through the random packing prevents the use of precipitating solvents.

In all examples, the liquid-to-gas contact surface area is increased via the creation of droplets and bubbles instead of an intricate mechanical structure. Droplets, bursting bubbles, and micro-droplets provide high liquid-to-gas surface area between the solvent and the target gas. Vortex tubes, detached eddies, and separated shear layers mix solvent with the target gas in the turbulent regime in-between the froth-generator plates. Micro-mixing of the droplet and bubble structures facilitates efficient absorption of the target gas.

When precipitating solvents are used, the absorbers of the present disclosure operate without the precipitants blocking the absorber.

### OBJECTS AND ADVANTAGES

The liquid-to-gas surface area is increased using screens or venturis to shatter or rupture the solvent into a myriad of droplets which create a very large surface area for mass transfer which is made up of the solvent itself. But instead of leaving the small droplets intact in a confined space which would produce a relatively static, fixed surface area similar to prior art devices, the present invention continuously and violently ruptures and reforms the droplets at a rapid rate. Bubbles also form which in turn are caused to burst forming thousands of microscopic droplets from each bursting bubble, whereby the active surface area of the liquid solvent is further increased. This high frequency and continuous regeneration of the surface of the liquid solvent is a significant aspect of the invention. An enormous reaction surface is created in a small volume. The reaction surface is continuously and violently ruptured and reformed to maximize the efficiency of the mass transfer. The huge surface area provided by these droplets and bubbles for mass transfer, combined with its unstable nature means that droplets and bubbles are reformed before mass transfer equilibrium is reached.

In other words, concentration of the component absorbed into solvent is still low when the droplets are reformed. Thus the concentration gradient, i.e. the difference between the concentrations of the target component in the gas, compared to the solvent, is still high. The dynamic reaction surface area is then reformed with lean solvent (i.e. solvent with a lower concentration of the absorbed component), thereby creating a high concentration gradient between the target gas and the solvent. The high concentration gradient maximizes the driving force for mass transfer.

The reactant surfaces are reformed at frequent intervals. Rich solvent is replaced with leaner solvent flowing down the tube. The reactant surfaces are reformed and replaced each time the flow passes through one of the screens.

The absorbers can be designed to operate within the parameters required for optimal gas absorption of a variety of commercial and generic, precipitating and non-precipitating absorbent solvents which have a range of viscosities, surface tensions, and specific gravities.

Individual gas absorber tubes are densely packed into each stage of the FTGA embodiment. The stages are flooded with solvent to a predetermined level above the multiple solvent injection ports in the gas absorber tubes or to the top of the tubes themselves such that solvent is introduced at a predetermined rate into the gas absorber tubes in each absorber stage.

Screens may be used in combination with solvent distribution plates. These plates serve to assist in redistributing the solvent and gas as they pass down the tubes.

The flow of mixed gases and solvent passes through screening plates, located at frequent intervals in each froth generator assembly, in order to reform the reactant surfaces of the droplets, bubbles, and micro-droplets. Rich solvent from the reactant surfaces is replaced with leaner solvent from fluid structures in the flow field. These droplets, bubbles and micro-droplets provide a high liquid-to-gas contact-area between the solvents and the target gas.

The liquid/gas separators remove a portion of the rich solvent from the flow. Lean solvent introduced in the next absorber stage replaces the portion of rich solvent removed by the liquid/gas separators.

In order to be able use a variety of commercial and generic solvents which all have a range of viscosities, surface tensions, and specific gravities, the absorber can be designed to operate within the parameters required for optimal gas absorption of specific solvents.

The size and number of the FTGA tubes, the mesh size of the screens and open-area ratio of the screens are selected in order to balance pressure drop with efficiency.

The distance between a screens and distributor plates is balanced with gas velocity and pressure drop to optimize system performance and removal of the target impurity from the gas stream.

Similarly distance between screens is also balanced with the rate-of-reaction to provide more or less time and distance for turbulent structures to form and reactant surfaces to absorb the target gas at high reaction rates.

It is believed that the following happens in the absorbers described above: In a packed bed, diffusive flow over random or structured packing consists of a boundary layer wetting surface of packing, an intermediate flow regime, and a free surface flow exposed to gas. As layers of fluid molecules flow over other layers of fluid molecules and turbulence occurs in flow between solid surfaces moderate mixing occurs between the surface layer and the intermediate layer, but little mixing occurs between the intermediate layer and the boundary layer. Molecular attraction of solid molecules is stronger than attraction of fluid molecules so boundary layer remains relatively static. As reactant in free surface layer is exposed to target gas, reaction rate is limited to regeneration of fresh reactant surfaces exposed by moderate mixing between intermediate layer and free surface layer that is driven by turbulence and diffusive flow dynamics.

In a spray tower, currents in the free surface of falling droplets caused by friction between the gas molecules and fluid molecules and, to a lesser extent, the Marangoni effect drive mixing between the free surface layer molecules that have reacted with the target gas and fresh reactant from inside the droplet.

The foregoing description of the invention has been presented for purposes of illustration and description and is not intended to be exhaustive or to limit the invention to the precise form disclosed. Modifications and variations are possible in light of the above teaching. The embodiments were chosen and described to best explain the principles of the invention and its practical application to thereby enable others skilled in the art to best use the invention in various embodiments suited to the particular use contemplated.

## Claims

1. A method of absorbing a selected component from an incoming flowing gas stream (1330), wherein said absorption occurs across the surface of an aqueous bubbly froth comprising a liquid solvent (1350) for said selected component, said froth being intermixed with numerous micro-droplets formed from causing bubbles in said froth to burst;
the method comprising the step of flowing said gas stream downwardly into a vertically extending reaction vessel (1320), wherein said reaction vessel has an upper inlet for said flowing gas stream (1331), a lower outlet for said flowing gas stream, and a solvent injector (1355) mounted inside the vessel (1320) near the top of the vessel for distributing liquid solvent downwardly;
wherein said reaction vessel carries a series of plurality of vertically spaced apart, ridge shaped screens (1360);
wherein each of said screens extends horizontally from side wall to side wall, extending transversely across said reaction vessel (1320);
the method being **characterized by** the steps of:
pressurizing said flowing gas stream (1330) in said reaction vessel; injecting said liquid solvent (1350) into said reaction vessel, to thereby form said aqueous froth comprising said solvent adjacent the surface of said ridge shaped screens (1360) as said gas stream flows through said ridge shaped screens, wherein said ridge shaped screens (1360) have vertical surface regions (1360a) which lie in planes within 20° of the direction of the gas flow, wherein the vertical surface regions (1360a) form side walls of ridges, wherein the ridge shaped screens also have an open surface region in a direction transverse to the direction in which said gas stream flows (1360b);
causing said solvent to accumulate on said ridge shaped screens, thereby causing said gas stream to increase in velocity through open regions of said screens and to increase in turbulence below said screens, and causing said accumulated solvent to periodically separate from said ridge shaped screens and enter said turbulent gas flow below said screens, thereby creating pulses of solvent entering said flowing gas stream, whereby the efficiency of absorption of said selected component is increased.

2. The method of claim 1, wherein the ridges of each screen extend along linear axes, and the linear axes of the ridges of adjacent screens are offset from each other.

3. The method of claim 1, wherein for each screen downstream of a first screen, the linear axes of the ridges of are rotated between 45° and 90° relative to a screen that is immediately upstream of that screen.

4. The method of claim 3, wherein for each screen downstream of a first screen, the linear axes of the ridges of are rotated between 60° and 80° relative to a screen that is immediately upstream of that screen.

## Patentansprüche

1. Verfahren zur Absorption einer ausgewählten Komponente aus einem einströmenden Gasstrom (1330), wobei die Absorption an der Oberfläche eines wässrigen sprudelnden Schaums erfolgt, der ein flüssiges Lösungsmittel (1350) für die ausgewählte Komponente umfasst, wobei der Schaum mit zahlreichen Mikrotröpfchen vermischt ist, die gebildet werden, indem Blasen in dem Schaum zum Platzen gebracht werden;
wobei das Verfahren den Schritt des Strömenlassen des Gasstroms abwärts in ein sich vertikal erstreckendes Reaktionsgefäß (1320) umfasst, wobei das Reaktionsgefäß einen oberen Einlass für den strömenden Gasstrom (1331), einen unteren Auslass für den strömenden Gasstrom und ein Lösungsmitteleinspritzventil (1355) umfasst, das im Inneren des Gefäßes (1320) in der Nähe der Oberseite des Gefäßes befestigt ist, um flüssiges Lösungsmittel abwärts zu verteilen;
wobei das Reaktionsgefäß eine Reihe aus einer Vielzahl von vertikal voneinander beabstandeten rippenförmigen Sieben (1360) trägt;
wobei sich jedes der Siebe, die sich quer über das Reaktionsgefäß (1320) erstrecken, horizontal von Seitenwand zu Seitenwand erstreckt;
wobei das Verfahren durch folgende Schritte gekennzeichnet ist:
das Unter-Druck-Setzen des strömenden Gasstroms (1330) in dem Reaktionsgefäß; das Einspritzen des flüssigen Lösungsmittels (1350) in das Reaktionsgefäß, um dadurch den wässrigen Schaum umfassend das Lösungsmittel benachbart zu der Oberfläche der rippenförmigen Siebe (1360) zu bilden, wenn der Gasstrom durch die rippenförmigen Siebe strömt, wobei die rippenförmigen Siebe (1360) vertikale Oberflächenbereiche (1360a) aufweisen, die in Ebenen innerhalb von 20° der Gasströmungsrichtung liegen, wobei die vertikalen Oberflächenbereiche (1360a) Seitenwände der Rippen bilden, wobei die rippenförmigen Siebe außerdem einen in einer Richtung quer zur Richtung, in der das Gas strömt, verlaufenden offenen Oberflächenbereich (1360b) aufweisen;
das Bewirken, dass sich das Lösungsmittel auf den rippenförmigen Sieben sammelt, wodurch bewirkt wird, dass der Gasstrom durch offene Bereiche der Siebe an Geschwindigkeit zunimmt und unterhalb der Siebe an Verwirbelung zunimmt, und bewirkt wird, dass sich das angesammelte Lösungsmittel periodisch von den rippenförmigen Sieben trennt und in den verwirbelten Gasstrom unterhalb der Siebe eintritt, wodurch Impulse des in den strömenden Gasstrom eintretenden Lösungsmittels erzeugt werden, wodurch die Absorptionseffizienz der ausgewählten Komponente erhöht wird.

2. Verfahren nach Anspruch 1, wobei sich die Rippen jedes Siebs entlang linearer Achsen erstrecken und die linearen Achsen der Rippen von benachbarten Sieben zueinander versetzt sind.

3. Verfahren nach Anspruch 1, wobei die linearen Achsen der Rippen für jedes Sieb stromab eines ersten Siebs zwischen 45° und 90° relativ zu einem Sieb gedreht sind, das sich unmittelbar stromauf von diesem Sieb befindet.

4. Verfahren nach Anspruch 3, wobei die linearen Achsen der Rippen für jedes Sieb stromab des ersten Siebs zwischen 60° und 80° relativ zu einem Sieb gedreht sind, das sich unmittelbar stromauf von diesem Sieb befindet.

## Revendications

1. Procédé d'absorption d'un composant sélectionné qui provient d'un flux gazeux en circulation entrant (1330), dans lequel ladite absorption se produit sur la surface d'une mousse à bulles aqueuse comprenant un solvant liquide (1350) pour ledit composant sélectionné, ladite mousse étant mélangée avec plusieurs microgouttelettes formées par l'éclatement des bulles au sein de ladite mousse ;
le procédé comprenant l'étape de circulation dudit flux gazeux en aval vers un vase de réaction qui s'étend verticalement (1320), dans lequel ledit vase de réaction possède une admission supérieure destinée audit flux gazeux en circulation (1331), une évacuation inférieure destinée audit flux gazeux en circulation, et un injecteur de solvant (1355) monté à l'intérieur du vase (1320) près de la partie supérieure du vase afin de distribuer du solvant liquide en aval ;
dans lequel ledit vase de réaction porte une série d'une pluralité d'écrans espacés en forme de nervures (1360) ;
dans lequel chacun desdits écrans s'étend à l'horizontale d'une paroi latérale vers l'autre, en s'étendant transversalement dans ledit vase de réaction (1320) ;
le procédé étant **caractérisé par** les étapes consistant à :
pressuriser ledit flux gazeux en circulation (1330) dans ledit vase de réaction ; injecter ledit solvant liquide (1350) dans ledit vase de réaction, afin de former ladite mouse aqueuse comprenant ledit solvant adjacente à la surface desdits écrans en forme de nervures (1360) lorsque ledit flux gazeux circule à travers lesdits écrans en forme de nervures, dans lequel lesdits écrans en forme de nervures (1360) possèdent des zones de surfaces verticales (1360a) qui se trouvent sur des plans à moins de 20° par rapport à la direction du flux gazeux, dans lequel les zones de surfaces verticales (1360a) forment les parois latérales des nervures, dans lequel les écrans en forme de nervures possèdent également une zone de surface ouverte dans une direction transversale par rapport à la direction dans laquelle ledit flux gazeux circule (1360b) ;
provoquer le fait que ledit solvant s'accumule sur lesdits écrans en forme de nervures, afin que la vitesse dudit flux gazeux augmente dans les zones ouvertes desdits écrans, et que sa turbulence augmente sous lesdits écrans, et que ledit solvant accumulé se sépare périodiquement desdits écrans en forme de nervures et pénètre dans ledit flux gazeux turbulent sous lesdits écrans, afin de créer des impulsions de solvant qui pénètre dans ledit flux gazeux en circulation, moyennant quoi l'efficacité d'absorption dudit composant sélectionné est augmentée.

2. Procédé selon la revendication 1, dans lequel les nervures de chaque écran s'étendent le long d'axes linéaires, et les axes linéaires des nervures des écrans adjacents sont décalés les uns par rapport aux autres.

3. Procédé selon la revendication 1, dans lequel, pour chaque écran en aval d'un premier écran, les axes linéaires des nervures sont tournés à 45° et 90° par rapport à un écran qui se trouve immédiatement en amont dudit écran.

4. Procédé selon la revendication 3, dans lequel, pour chaque écran en aval d'un premier écran, les axes linéaires des nervures sont tournés à 60° et 80° par rapport à un écran qui se trouve immédiatement en amont dudit écran.
